(19) Europäisches Patentamt
European Patent Office
Office européen des brevets

(11) EP 3 724 295 B1

(12) FASCICULE DE BREVET EUROPEEN

(45) Date de publication et mention de la délivrance du brevet:
**17.07.2024 Bulletin 2024/29**

(21) Numéro de dépôt: **18816057.6**

(22) Date de dépôt: **12.12.2018**

(51) Classification Internationale des Brevets (IPC):
***C09K 8/588*** *(2006.01)* ***C08F 16/00*** *(2006.01)*

(52) Classification Coopérative des Brevets (CPC):
(C-Sets disponibles)
**C09K 8/588; C08F 220/56; C08F 265/10** (Cont.)

(86) Numéro de dépôt international:
**PCT/EP2018/084575**

(87) Numéro de publication internationale:
**WO 2019/115619 (20.06.2019 Gazette 2019/25)**

# (54) PROCEDE DE PREPARATION D'UNE COMPOSITION COMPRENANT UN (CO)POLYMERE HYDROSOLUBLE ENCAPSULE DANS UNE ENVELOPPE ET UTILISATION DE CETTE COMPOSITION DANS LA RECUPERATION ASSISTEE DU PETROLE ET DU GAZ

VERFAHREN ZUR HERSTELLUNG EINER ZUSAMMENSETZUNG ENTHALTEND EIN IN EINER HÜLLE EINGEKAPSELTES WASSERLÖSLICHES (CO)POLYMER UND VERWENDUNG DIESER ZUSAMMENSETZUNG IN DER UNTERSTÜTZTEN ÖL- UND GASRÜCKGEWINNUNG

METHOD FOR PREPARING A COMPOSITION COMPRISING A HYDROSOLUBLE (CO)POLYMER ENCAPSULATED IN A SHELL AND USE OF THIS COMPOSITION IN ASSISTED OIL AND GAS RECOVERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2017 FR 1762196**

(43) Date de publication de la demande:
**21.10.2020 Bulletin 2020/43**

(73) Titulaire: **SNF Group**
**42160 Andrézieux-Bouthéon (FR)**

(72) Inventeurs:
- **BRAUN, Olivier**
  **42160 ANDREZIEUX BOUTHEON (FR)**
- **LAUBER, Lionel**
  **42160 ANDREZIEUX BOUTHEON (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-2011/113470** **WO-A1-2014/075964**
**WO-A1-83/00337**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 724 295 B1

(52) Classification Coopérative des Brevets (CPC):
(Cont.)

C-Sets
**C08F 220/56, C08F 220/585, C08F 220/06;**
**C08F 220/56, C08F 220/585, C08F 220/06,**
**C08F 220/365;**
**C08F 265/10, C08F 220/56, C08F 220/365**

## Description

## DOMAINE DE L'INVENTION

La présente invention concerne un procédé de préparation d'une composition comprenant au moins un (co)polymère hydrosoluble encapsulé dans une enveloppe.

Un autre aspect de l'invention concerne un procédé de récupération assistée du pétrole et du gaz utilisant ladite composition.

## ETAT ANTERIEUR DE LA TECHNIQUE

La plupart des champs de pétrole actuellement exploités sont devenus matures et ont, de fait, amorcé le déclin de leur production ou sont sur le point de le faire. Le taux de récupération de ces champs est actuellement de l'ordre de 15 à 35 % en moyenne par rapport à la quantité initiale de pétrole. Ils offrent donc un potentiel de production encore considérable.

De manière générale, la récupération du pétrole brut contenu dans les gisements s'effectue en plusieurs temps.

La production résulte d'abord de l'énergie naturelle des fluides et de la roche qui se décompriment. A l'issue de cette phase de déplétion, la quantité de pétrole récupérée en surface représente en moyenne quelques 5 à 15 % de la réserve initiale. Il est donc nécessaire, dans un deuxième temps, d'employer des techniques visant à accroître le rendement de récupération en maintenant la pression du champ.

La méthode la plus fréquemment mise en oeuvre consiste à injecter de l'eau dans le gisement par le biais de puits injecteurs dédiés à cette fin. On parle alors de récupération secondaire. Cette deuxième phase s'arrête lorsque le rapport eau/pétrole est trop important, c'est-à-dire lorsque la quantité en eau dans le mélange produit par les puits producteurs est trop importante. Cette récupération secondaire permet ainsi d'obtenir un taux de récupération additionnel de l'ordre de 10 à 20 %.

Les autres techniques utilisables sont regroupées sous le nom de récupération assistée du pétrole (RAP ou EOR acronyme anglais de « Enhanced Oil Recovery »). Leur but est de récupérer entre 10 et 35 % de pétrole additionnel par rapport à la quantité initiale de pétrole. Sous le terme de récupération assistée du pétrole, sont connues diverses techniques thermiques, ou non, telles que les techniques dites électrique, miscible, vapeur, ou encore chimique de récupération améliorée du pétrole restant en place (voir « Oil & gas science and technology » - revue IFP, vol 63 (2008) n°1, pp 9-19).

Par « pétrole », on désigne tout type d'huile, à savoir huile légère comme huile lourde, voire bitumineuse. Une huile résulte généralement de la transformation naturelle de matière organique et est composée d'un mélange d'hydrocarbures. Dans la description de l'art antérieur ou de l'invention, les termes pétrole et huile sont utilisés pour désigner la même matière, à l'exception de la mention de la composition d'une émulsion ou d'une dispersion.

L'efficacité du balayage par injection d'eau est généralement améliorée par l'addition de (co)polymères hydrosolubles. Les bénéfices attendus et prouvés de l'utilisation de (co)polymères, au travers de la « viscosification » des eaux injectées, sont l'amélioration du balayage et la réduction du contraste de viscosité entre les fluides pour maîtriser leur ratio de mobilité dans le champ, et ce afin de récupérer le pétrole rapidement et efficacement. Ces (co)polymères augmentent la viscosité de l'eau.

Il est connu de l'homme du métier que les (co)polymères hydrosolubles synthétiques, en particulier les (co)polymères à base d'acrylamide, sont des (co)polymères très avantageux pour augmenter la viscosité des solutions aqueuses et sont de fait, majoritairement utilisés en récupération assistée.

Cependant les polymères d'acrylamide sont sensibles aux dégradations chimiques, biologiques et mécaniques. Des solutions ont été proposées dans les documents WO 2010/133258 et WO 2013/108173 pour améliorer la résistance des polymères aux dégradations chimiques et aux températures élevées. D'autres solutions ont été proposées dans les documents US 2012/0292029 et US 2015/041143 pour éviter la dégradation mécanique de polymère en utilisant un matériel adapté.

Le document US 7,897,546 décrit l'utilisation de microparticules de polymères expansibles fortement réticulés encapsulées pour modifier la perméabilité à l'eau dans un réservoir souterrain. Ces microparticules obtenues sont hydrogonflantes. Leur gonflement dans certaines zones de la formation permet le bouchage desdites zones par formation d'un gel.

Le document US 2011/0312858 décrit l'utilisation d'une capsule en verre borosilicaté contenant un composé chimique dans le domaine du pétrole pour les étapes de forage, de cimentation et de stimulation. Le composé peut être un polymère hydrogonflant.

Le document WO 83/00337 divulgue une émulsion eau dans huile « auto inverseuse » utilisée dans un procédé de récupération assistée du pétrole. Cette émulsion comprend une phase aqueuse contenant un polymère hydrosoluble de type polyacrylamide. Elle comprend en outre un émulsifiant de type eau dans huile et un agent inverseur qui permet

l'auto inversion de l'émulsion. Le polymère hydrosoluble n'est pas enveloppé par un polymère se dégradant dans la formation souterraine.

Ces différents polymères encapsulés ou non ne sont pas adaptés à l'application de récupération assistée du pétrole par balayage étant donné qu'ils ne peuvent pas se propager loin dans la formation et donc procurer un balayage uniforme et efficace du réservoir. En effet, le gel par son placement sélectif modifie le balayage du réservoir et n'a pas pour fonction de pousser le pétrole. Le traitement de conformance est ponctuel et a pour objectif de modifier la perméabilité du réservoir de manière localisée.

Le problème que se propose de résoudre la Demanderesse est de pouvoir injecter une composition aqueuse contenant des polymères dans le cadre d'opération(s) de récupération assistée du pétrole ou du gaz par balayage d'une formation souterraine tout en évitant la dégradation mécanique et chimique des polymères lors de l'injection de la composition et au sein de la formation souterraine.

EXPOSE DE L'INVENTION

L'invention concerne un procédé de préparation d'une dispersion d'une phase hydrophile dans une phase lipophile tel que défini dans la revendication 1. Cette dispersion comprend :

- une phase hydrophile comprenant au moins un (co)polymère hydrosoluble,
- une phase lipophile,
- au moins un polymère interfacial composé d'au moins un monomère de formule (1) :

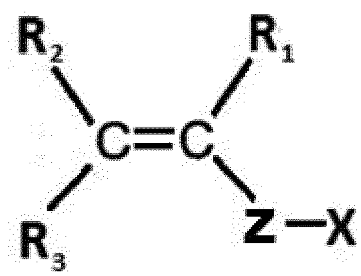

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; OC(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamides, les esters de sorbitane, les esters de sorbitane éthoxylés, les esters de glyceryle, et les polyglycosides ; et comprenant une chaine hydrocarbonée, saturée ou insaturée, linéaire, ramifiée ou cyclique, éventuellement aromatique.

Par « polymère composé d'au moins un monomère », on désigne un polymère obtenu à partir de plusieurs molécules d'au moins un monomère. Ainsi, un polymère d'un monomère correspond à un polymère obtenu à partir de plusieurs unités de répétition de molécules d'un monomère.

*La dispersion phase hydrophile dans phase lipophile*

La composition obtenue selon l'invention est une dispersion d'une phase hydrophile dans une phase lipophile. En d'autres termes, la phase lipophile est la phase continue et la phase hydrophile est la phase dispersée. Le polymère interfacial vient se placer à l'interface entre la phase hydrophile et la phase lipophile. De manière préférentielle, la phase hydrophile est une phase aqueuse et la phase lipophile est une phase huileuse. Ainsi, la composition obtenue selon l'invention est avantageusement une dispersion eau dans huile, plus avantageusement une émulsion eau dans huile.

Le polymère interfacial obtenu par polymérisation d'au moins un monomère de formule (I) forme une enveloppe à l'interface de la phase hydrophile et de la phase lipophile. De manière générale, l'enveloppe est résistante aux contraintes mécaniques comme le cisaillement et plus particulièrement le cisaillement lors de la mise en solution du polymère, lors de son injection au travers de vannes, duses et autres restrictions avec des vitesses de passage supérieures à 3 mètres par seconde, ou lors du balayage d'une formation souterraine à proximité de la liaison couche-trou.

L'enveloppe est aussi résistante aux contraintes chimiques qui peuvent être dues à la présence d'oxygène, d'$H_2S$ ou de métaux durant la phase d'injection. De manière préférentielle, l'enveloppe est semi-perméable.

Comme déjà indiqué, de préférence, la dispersion est sous forme d'émulsion inverse.

De manière générale, la phase hydrophile se présente sous la forme de gouttelettes micrométriques dispersées, avantageusement émulsionnées, dans la phase lipophile. La taille moyenne de ces gouttelettes est avantageusement comprise entre 0,01 et 30 $\mu$m, plus avantageusement entre 0,05 et 3 $\mu$m. Le polymère interfacial vient donc se placer à l'interface entre la phase hydrophile et la phase lipophile au niveau de chaque gouttelette. La taille moyenne des gouttelettes est avantageusement mesurée avec un appareil de mesure laser utilisant les techniques conventionnelles qui font partie des connaissances générales de l'homme de métier. Un appareil de type Mastersizer de la société Malvern pourra être utilisé à cet effet.

Généralement, la dispersion obtenue selon l'invention contient entre 10 et 65 % en masse de (co)polymère hydrosoluble, plus avantageusement entre 30 et 60 % en masse.

En outre, la dispersion obtenue selon l'invention présente un rapport massique phase hydrophile/phase lipophile avantageusement compris entre 0,1 et 100, plus avantageusement entre 1 et 80, et encore plus avantageusement entre 10 et 60.

*Le (co)polymère hydrosoluble de la phase hydrophile*

Le (co)polymère hydrosoluble peut être un (co)polymère naturel, comme par exemple les gommes xanthane, les gommes guar, le schyzophillan, le scléroglucan ou d'autres composés de la famille des polysaccharides, ou un (co)polymère synthétique ou semi-synthétique. De préférence, le (co)polymère hydrosoluble est un (co)polymère synthétique.

Lorsque le (co)polymère hydrosoluble est un (co)polymère synthétique, il s'agit préférentiellement d'un (co)polymère obtenu à partir d'au moins un monomère non ionique et/ou au moins un monomère anionique et/ou au moins un monomère cationique et/ou un monomère zwittérionique.

Le ou les monomères non ioniques pouvant être utilisés dans le cadre de l'invention peuvent être choisis, notamment, dans le groupe comprenant les monomères vinyliques solubles dans l'eau. Le monomère non ionique ne comprend pas les monomères de formule (I). Des monomères préférés appartenant à cette classe sont, par exemple, l'acrylamide, le méthacrylamide, le N-isopropylacrylamide, le N,N-diméthylacrylamide et le N-méthylolacrylamide. Egalement, peuvent être utilisés la N-vinylformamide, le N-vinyl acétamide, la N-vinylpyridine et la N-vinylpyrrolidone, l'acryloyl morpholine (ACMO), le méthacrylate de glycidyle, le méthacrylate de glycéryle et la diacétone acrylamide. Un monomère non ionique préféré est l'acrylamide.

Le ou les monomères anioniques sont préférentiellement choisis parmi l'acide acrylique, l'acide méthacrylique, l'acide itaconique, l'acide maléique, l'acide acrylamido tertio butyl sulfonique (également appelé ATBS ou acide 2-acrylamido-2-méthylpropane sulfonique), l'acide vinylsulphonique, l'acide vinylphosphonique, ledit monomère anionique étant non salifié, partiellement ou totalement salifié, et les sels du méthacrylate de 3-sulfopropyle. La forme salifiée correspond avantageusement aux sels de métaux alcalins (Li, Na, K...), de métaux alcalino-terreux (Ca, Mg...) ou d'ammonium, notamment les ammoniums quaternaires.

Ci-avant et ci-après, les monomères cationiques et les monomères anioniques, comme par exemple le MADAME et l'ATBS, incluent les formes non salifiées, salifiées, partiellement ou totalement salifiées.

Le ou les monomères cationiques pouvant être utilisés dans le cadre de l'invention peuvent être choisis, notamment parmi les monomères du type acrylamide, acrylique, vinylique, allylique ou maléique possédant une fonction ammonium quaternaire par salification ou quaternisation. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de methacrylamido propyltriméthyl ammonium (MAPTAC).

Le ou les monomères cationiques peuvent aussi être choisis parmi les monomères cationiques hydrophobes tel que décrit dans le brevet FR 2 868 783.

Le ou les monomères zwitterioniques peuvent également être utilisés dans le cadre de l'invention ; ils associent à la fois les charges anioniques et cationiques sur un seul et même monomère. Ils peuvent être choisis, notamment parmi les monomères du type bétaïne, sultaïne, sulfobétaïne, phosphobétaïne, et carboxybétaïne. A titre d'exemples de monomères zwitterioniques, on peut mentionner le sulfopropyl diméthylammonium éthyl méthacrylate, le sulfopropyl diméthylammonium propylméthacrylamide, le sulfopropyl 2-vinylpyridinium, et le phosphate éthyl triméthylammonium éthyl méthacrylate.

Selon un mode particulier de l'invention, le (co)polymère hydrosoluble est composé uniquement d'ATBS.

Le (co)polymère hydrosoluble est préférentiellement un (co)polymère anionique à base d'acrylamide, préférentiellement un (co)polymère d'acrylamide et d'acide acrylamido tertio butyl sulfonique (ATBS) optionnellement partiellement post-hydrolysé, plus préférentiellement un ter(co)polymère d'acrylamide, d'acide acrylique et d'acide acrylamido tertio butyl sulfonique (ATBS).

Le (co)polymère hydrosoluble contient préférentiellement entre 10% et 50% molaire de monomère(s) anionique(s), plus préférentiellement entre 20% et 45% molaire.

Le (co)polymère hydrosoluble contient préférentiellement entre 50% et 90% molaire de monomère(s) non ionique(s), plus préférentiellement entre 60% et 75% molaire.

De manière préférée, le (co)polymère hydrosoluble contient uniquement des unités monomériques anioniques et non-ioniques. En d'autres termes, il est préférentiellement obtenu à partir d'au moins un monomère anionique et d'au moins un monomère non-ionique.

Selon l'invention, le (co)polymère hydrosoluble peut avoir une structure linéaire, branchée (ramifiée), star (en forme d'étoile) ou comb (en forme de peigne). Ces structures peuvent être obtenues par sélection au choix de l'amorceur, de l'agent de transfert, de la technique de polymérisation telle que la polymérisation radicalaire contrôlée dite RAFT (transfert de chaîne réversible par addition-fragmentation, de l'anglais "reversible-addition fragmentation chain transfer"), NMP (polymérisation en présence de nitroxydes, de l'anglais "Nitroxide Mediated Polymerization") ou ATRP (polymérisation radicalaire par transfert d'atomes, de l'anglais "Atom Transfert Radical Polymerization"), de l'incorporation de monomères structuraux, de la concentration... Les connaissances générales de l'homme du métier lui permettent de préparer un (co)polymère hydrosoluble ayant un de ces types de structure.

Selon l'invention, le (co)polymère hydrosoluble est avantageusement linéaire ou structuré. Par (co)polymère structuré (ramifié, étoile, peigne), on désigne un (co)polymère non linéaire qui possède des chaînes latérales de manière à obtenir, lorsque ce (co)polymère est mis en solution dans l'eau, un fort état d'enchevêtrement conduisant à des viscosités à bas gradient très importantes. Le polymère hydrosoluble, n'est pas réticulé.

Dans le cas où le (co)polymère est structuré, il peut être structuré :

- par au moins un agent de structure, pouvant être choisi dans le groupe comprenant des monomères à insaturation polyéthylénique (ayant au minimum deux fonctions insaturées), comme par exemple les fonctions vinyliques, allyliques, acryliques et époxy et l'on peut citer par exemple le méthylène bis acrylamide (MBA), la triallyamine, ou encore

- par des macroamorceurs tels que les polyperoxydes, polyazoïques et les polyagents de transfert tels que les (co)polymères polymercaptants.

Selon un mode de réalisation particulier, le (co)polymère hydrosoluble peut comprendre au moins un groupe à LCST.

Selon les connaissances générales de l'homme du métier, un groupe à LCST correspond à un groupe dont la solubilité dans l'eau pour une concentration déterminée, est modifiée au-delà d'une certaine température et en fonction de la salinité. Il s'agit d'un groupe présentant une température de transition par chauffage définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition minimale est appelée « LCST » (température critique inférieure de solubilité, de l'acronyme anglais « Lower Critical Solution Température »). Pour chaque concentration de groupe à LCST, une température de transition par chauffage est observée. Elle est supérieure à la LCST qui est le point minimum de la courbe. En dessous de cette température, le (co)polymère est soluble dans l'eau, au-dessus de cette température, le (co)polymère perd sa solubilité dans l'eau.

Selon un mode de réalisation particulier, le (co)polymère hydrosoluble peut comprendre au moins un groupe à UCST.

Selon les connaissances générales de l'homme du métier, un groupe à UCST correspond à un groupe dont la solubilité dans l'eau pour une concentration déterminée, est modifiée en dessous d'une certaine température et en fonction de la salinité. Il s'agit d'un groupe présentant une température de transition par refroidissement définissant son manque d'affinité avec le milieu solvant. Le manque d'affinité avec le solvant se traduit par une opacification ou une perte de transparence qui peut être due à une précipitation, une agrégation, une gélification ou une viscosification du milieu. La température de transition maximale est appelée « UCST » (température critique supérieure de solubilité, de l'acronyme anglais « Upper Critical Solution Température »). Pour chaque concentration de groupe à UCST, une température de transition par refroidissement est observée. Elle est supérieure à la LCST qui est le point minimum de la courbe. Au-dessus de cette température, le (co)polymère est soluble dans l'eau, en-dessous de cette température, le (co)polymère perd sa solubilité dans l'eau.

Selon l'invention, le (co)polymère a un poids moléculaire avantageusement élevé. Par « poids moléculaire élevé », on désigne des poids moléculaires d'au moins 1 million de g/mol, préférentiellement entre 2 et 40 millions g/mol,

plus préférentiellement entre 5 et 30 millions g/mol. Le poids moléculaire s'entend en poids moléculaire moyen en poids.

*Le polymère interfacial*

Comme déjà indiqué, le polymère interfacial est obtenu à partir d'au moins un monomère de formule (1) :

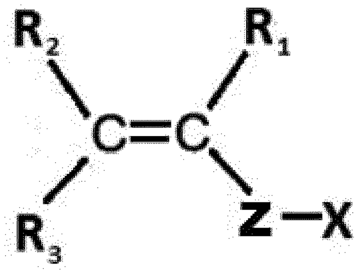

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; OC(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamides, les esters de sorbitane, les esters de sorbitane éthoxylés, les esters de glyceryle, et les polyglycosides ; et comprenant une chaine hydrocarbonée, saturée ou insaturée, linéaire, ramifiée ou cyclique, éventuellement aromatique.

Ainsi, X peut notamment être un des groupes suivants :

- un alcanolamide, de préférence de formule monooléate de diéthanolamide (Witcamide 511), stearoyle éthanolamide (Witcamide 70), monoisopropanolamide d'acide oléique (Witcamide 61), monoisopropanolamide d'acide isostéarique (Witcamide SPA), monoisopropanolamide de coco (Empilan CLS), monoéthanolamide de coco, diéthanolamide d'acide oléique (Mexanyl), le monoisopropanolamide d'oleyl (Simaline IE 101)

- un ester de sorbitane, par exemple et de manière non exhaustive un monolaurate de sorbitane (Span 20), monopalmitate de sorbitane (Span 40), monostéarate de sorbitane (Span 60), monoisostéarate de sorbitane (Span 70), tristéarate de sorbitane (Span 65), monooléate de sorbitane (Span 80), sesquioléate de sorbitane (Span 83) ou trioléate de sorbitane (Span 85)

- un ester de sorbitane éthoxylés, de préférence de formule polyéthylène glycol de monolaurate de sorbitan (Tween 20), polyéthylène glycol de monopalmitate de sorbitan (Tween 40), polyéthylène glycol de monostéarate de sorbitan (Tween 60), polyéthylène glycol de monooléate de sorbitan (Tween 80) ou polyéthylène glycol de trioleate de sorbitan (Tween 85)

- un ester de glyceryle, de préférence de formule monolaurate de polyglycerol (Decaglyn 1L), myristate de polyglycerol (Decaglyn 1-M), decaoleate de polyglycerol (Polyaldo 10-10-0), distéarate de polyglycerol (Polyaldo 6-2-S), oléate de polyglycerol (Polyaldo 10-1-0), caprate de polyglycerol (Polyaldo 10-1 CC KFG), stéarate de polyglycerol (Polyaldo 10-1-S)

- un polyglucosides, de préférence de formule decyle glucoside (Triton BG-10), lauryle glucoside (Plantacare 1200UP), capryle glucoside (Plantacare 810 UP), glucoside de butyle (Simulsol SL 4), glucoside d'heptyle (Simulsol SL 7 G), glucoside d'octyle et de decyle (Simulsol SL 8), glucoside de decyle (Simulsol SL 10), glucoside d'undecyle (Simulsol SL 11 W), glucoside de decyle & hexadecyle (Simulsol SL 26), glucoside d'octyle & hexadecyle (Simulsol SL 826).

Selon un mode particulier, le monomère de formule (1) a une valeur HLB avantageusement inférieure à 4,5,

et avantageusement d'au moins 1.

La valeur HLB (« hydrophilic - lipophilic balance » ou équilibre hydrophile/lipophile) permet de chiffrer l'équilibre existant entre la partie hydrophile et la partie lipophile d'une molécule. Cette valeur est déterminée en calculant les valeurs des différentes parties de la molécule, comme décrit par Crriffin en 1949 (Griffin WC, Classification of Surface-Active Agents by HLB, Journal of the Society of Cosmetic Chemists 1 (1949) : 311).

Dans la présente invention, la méthode de Griffin, utilisée conventionnellement, est basée sur le calcul des valeurs des groupes chimiques de la molécule. Griffin a assigné une valeur comprise entre 0 et 20 donnant ainsi l'information sur la solubilité dans un milieu hydrophile et dans un milieu lipophile de la molécule. Ainsi les substances ayant un HLB de 10 sont distribuées équitablement dans les deux phases, à savoir la partie hydrophile dans la phase hydrophile et la partie hydrophobe dans la phase lipophile.

$$HLB = 20\ (Mh/M)$$

M : la masse moléculaire de la molécule

Mh : la masse moléculaire de la partie hydrophile.

Selon un mode de réalisation préféré, le monomère de formule (I) a la formule suivante :

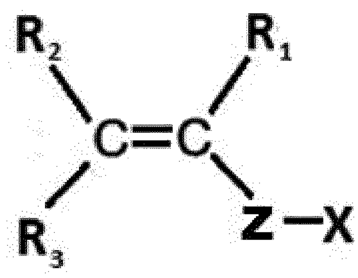

dans laquelle,

- R1, R2, R3 indépendamment sont un atome d'hydrogène ou un groupe méthyle,
- Z est choisi dans le groupe comprenant $CH_2$, C(=O)-O, C(=O)-NH, et - (C=O)-O-$CH_2$-CH(OH)-$CH_2$,
- X est un groupe choisi parmi les alcanolamide et les esters de sorbitane, et comprenant une chaine hydrocarbonée, saturée ou insaturée, linéaire, ramifiée ou cyclique, éventuellement aromatique.

Selon un mode de réalisation préféré, le monomère de formule (I) est choisi parmi le (méth)acrylate du monooléate de sorbitane, le (méth)acrylate de 2-hydroxypropyl du monooléate de diéthanolamide ou le (méth)acrylate glycéryl du monooléate de sorbitane.

Selon un mode de réalisation préféré, le monomère de formule (I) est le suivant :

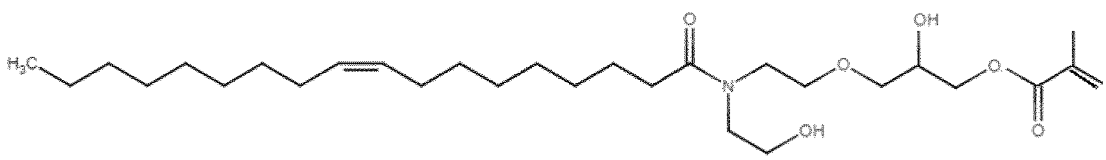

Ce monomère préféré correspond à la formule $H_3C-(CH_2)_7-CH=CH-(CH_2)_7-C(=O)-N(CH_2CH_2OH)-(CH_2)_2-O-CH_2-CH(OH)-CH_2-O-C(=O)-C(CH_3)=CH_2$.

Dans un mode particulier de l'invention, le polymère interfacial est obtenu par polymérisation d'au moins un monomère de formule (I).

Dans un mode de réalisation particulier, le polymère interfacial est obtenu par polymérisation d'au moins un monomère de formule (I) et d'au moins un monomère non ionique et/ou au moins un monomère anionique et/ou au moins un monomère cationique.

Les différents monomères mis en oeuvre peuvent être choisis parmi les listes respectives citées précédemment dans la description du (co)polymère hydrosoluble.

De manière avantageuse, le polymère interfacial comprend entre 0,0001 et 10 %, plus avantageusement entre

0,0001 et 5 %, et encore plus avantageusement de 0,0001 à 1% de monomère de formule (I), en poids par rapport au poids total de monomères.

Le cas échéant, le polymère interfacial comprend entre 50 et 99,9999 %, plus avantageusement entre 60 et 99,9999 % de monomère non-ionique (distinct du monomère de formule (1)), en poids par rapport au poids total de monomères.

Le cas échéant, le polymère interfacial comprend entre 10 et 99,9999 %, plus avantageusement entre 20 et 99,9999 % de monomère anionique, en poids par rapport au poids total de monomères.

Le cas échéant, le polymère interfacial comprend entre 1 et 99,9999 %, plus avantageusement entre 10 et 99,9999 % de monomère cationique, en poids par rapport au poids total de monomères.

*L'enveloppe*

Selon l'invention, le polymère interfacial forme une enveloppe autour des gouttelettes formant la phase hydrophile. Outre les monomères mentionnés ci-dessus, le polymère interfacial peut comprendre au moins un agent de structure. L'agent de structure est avantageusement choisi parmi les diacrylamides ou méthacrylamides de diamines ; les esters acryliques de composés di, tri, ou tétrahydroxy ; les esters méthacryliques de composés di, tri, ou tétrahydroxy ; les composés divinyliques préférentiellement séparés par un groupement azo ; les composés diallyliques préférentiellement séparés par un groupement azo ; les esters vinyliques d'acides di ou trifonctionnels ; les esters allyliques d'acides di ou trifonctionnels ; la méthylènebisacrylamide ; la diallylamine ; la triallylamine ; le chlorure de tétraallylammonium ; la divinylsulfone ; le diméthacrylate de polyéthylène glycol et l'éther diallylique de diéthylèneglycol.

*Procédé de préparation*

Comme déjà indiqué, l'invention concerne un procédé de préparation de la dispersion telle que décrite ci-dessus.

Selon l'invention, le (co)polymère hydrosoluble est avantageusement obtenu par polymérisation en émulsion inverse ou en microémulsion inverse. Cette technique de polymérisation est bien connue de l'homme de métier. Elle consiste à mettre en émulsion, dans une phase lipophile, une phase hydrophile contenant le ou les monomères. Cette émulsification se fait généralement grâce à un tensioactif eau dans huile. Après polymérisation du ou des monomères, un tensioactif huile dans eau est éventuellement ajouté pour faciliter, ultérieurement, l'inversion de l'émulsion dans l'eau.

La phase lipophile de la dispersion obtenue selon l'invention comprend au moins un solvant lipophile. La phase lipophile est avantageusement choisie parmi les huiles hydrocarbonées ayant un point d'ébullition d'au moins 100°C, préférentiellement d'au moins 135°C, plus préférentiellement d'au moins 180°C. Préférentiellement, la phase lipophile est choisie parmi les huiles hydrocarbonées ayant un point d'ébullition qui ne dépasse pas 200°C. Si l'huile présente une plage d'ébullition, le terme "point d'ébullition" se réfère à la limite inférieure de la plage d'ébullition.

Le solvant lipophile est avantageusement une huile hydrocarbonée. Cette huile hydrocarbonée peut être choisie parmi les hydrocarbures aliphatiques, les hydrocarbures aromatiques ou les mélanges de ces huiles. Parmi ces huiles, nous pouvons citer, mais sans s'y limiter, les solvants non miscibles dans l'eau, tels que les hydrocarbures paraffiniques ; les hydrocarbures naphtène ; les hydrocarbures aromatiques ; les oléfines ; et leurs mélanges. Les hydrocarbures paraffiniques peuvent être des hydrocarbures paraffiniques saturés, linéaires ou ramifiés. Les hydrocarbures aromatiques comprennent, sans s'y limiter, le toluène et le xylène. L'huile peut être choisie parmi les huiles végétales, par exemple l'huile de soja, l'huile de colza, ou toute autre huile produite à partir de la graine de l'une quelconque de plusieurs variétés de la plante de colza. L'huile peut être issue de matières premières renouvelables comme l'isoamyl laurate ou les isoparaffines renouvelables, comme celles distribuées par la société Total sous la marque Biolife.

Selon un mode particulier de l'invention, la polymérisation du polymère interfacial s'effectue pendant la polymérisation du (co)polymère hydrosoluble de la phase hydrophile. Autrement dit, et plus précisément, un procédé particulier, selon l'invention, de préparation d'une dispersion d'une phase hydrophile dans une phase lipophile comprend les étapes suivantes :

a) Préparation d'une phase hydrophile comprenant au moins un monomère distinct du monomère de formule (1),
b) Préparation d'une phase lipophile comprenant un solvant lipophile et au moins un monomère de formule (1) :

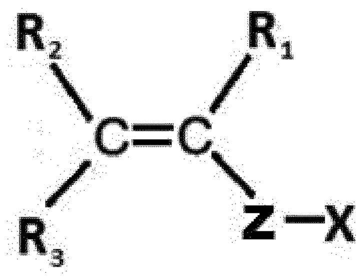

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; OC(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamides, les esters de sorbitane, les esters de sorbitane éthoxylés, les esters de glyceryle, et les polyglycosides ; et comprenant une chaine hydrocarbonée, saturée ou insaturée, linéaire, ramifiée ou cyclique, éventuellement aromatique,

c) introduction de la phase hydrophile dans la phase lipophile sous agitation afin de former une dispersion phase hydrophile dans phase lipophile,
d) une fois la dispersion formée, polymérisation des monomères de la phase hydrophile et polymérisation d'au moins un monomère de formule (I).

L'ordre des étapes a) et b) n'a pas d'importance, l'étape b) pouvant être réalisée avant l'étape a).
Le au moins un monomère de l'étape a) correspond aux monomères mentionnés ci-avant pour définir le (co)polymère hydrosoluble.
La polymérisation de l'étape d) est avantageusement amorcée par l'introduction d'au moins un amorceur radicalaire.
Selon l'invention, la phase hydrophile peut comprendre un ou plusieurs agents de structure.
Dans le cas où la polymérisation du au moins un monomère de formule (I) s'effectue en même temps que la formation, par polymérisation du (co)polymère hydrosoluble, le monomère de formule (I) a, de préférence, une valeur HLB inférieure à 4,5, et avantageusement supérieure ou égale à 1.
Selon l'invention, la phase lipophile peut comprendre un ou plusieurs tensioactifs eau-dans-huile ne portant pas de fonctions polymérisables de type fonctions vinyliques.
Selon l'invention, après l'étape d) l'eau de la phase hydrophile peut être partiellement ou totalement éliminée de la dispersion. Comme technique d'élimination de l'eau nous pouvons citer à titre d'exemple la distillation sous pression réduite. Cette distillation peut être continue ou discontinue, avec entrainement azéotropique. Préférentiellement, la distillation est continue et une huile légère (point d'ébullition inférieure à 200°C) est utilisée pour faciliter l'entrainement de l'eau.
Selon un autre mode particulier de l'invention, la polymérisation du polymère interfacial s'effectue après la formation, par polymérisation, du (co)polymère hydrosoluble de la phase hydrophile. Autrement dit, et plus précisément, un procédé particulier de préparation de la dispersion d'une phase hydrophile dans une phase lipophile selon l'invention comprend les étapes suivantes :

aa) Préparation d'une phase hydrophile comprenant au moins un monomère distinct du monomère de formule (I),
bb) Préparation d'une phase lipophile comprenant un solvant lipophile et au moins un tensioactif eau dans huile ne portant pas de fonction polymérisable,
cc) Introduction de la phase hydrophile dans la phase lipophile sous agitation afin de former une dispersion phase hydrophile dans phase lipophile,
dd) Une fois la dispersion formée, polymérisation des monomères de la phase hydrophile,
ee) Une fois la polymérisation achevée, introduction d'au moins un monomère de formule (1) :

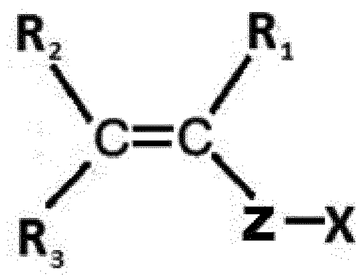

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; OC(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamides, les esters de sorbitane, les esters de sorbitane éthoxylés, les esters de glyceryle, et les polyglycosides ; et comprenant une chaine hydrocarbonée, saturée ou insaturée, linéaire, ramifiée ou cyclique, éventuellement aromatique,

ff) Polymérisation d'au moins un monomère de formule (I).

L'ordre des étapes aa) et bb) n'a pas d'importance, l'étape bb) pouvant être réalisée avant l'étape aa).

Le au moins un monomère de l'étape aa) correspond aux monomères mentionnés ci-avant pour définir le (co)polymère hydrosoluble.

La polymérisation de l'étape dd) est avantageusement amorcée par l'introduction d'au moins un amorceur radicalaire.

La polymérisation de l'étape ff) est avantageusement amorcée par l'introduction d'au moins un amorceur radicalaire.

Selon l'invention la phase hydrophile peut comprendre un ou plusieurs agents de structure.

Selon l'invention, en étape ee) des monomères, distincts du monomère de formule (I), et/ou au moins un agent de structure peuvent être introduits dans la dispersion avec le monomère de formule (I).

Selon l'invention, l'étape ee) comprend l'introduction dans la dispersion, avec le monomère de formule (I), d'au moins un monomère distinct du monomère de formule (I), et/ou au moins un agent de structure.

Selon un mode particulier de l'invention, après l'étape dd) et avant l'étape ee) l'eau de la phase hydrophile peut être partiellement ou totalement éliminée de la dispersion. Comme technique d'élimination de l'eau nous pouvons citer à titre d'exemple la distillation sous pression réduite. Cette distillation peut être continue ou discontinue, avec entrainement azéotropique. Préférentiellement, la distillation est continue et une huile légère (point d'ébullition inférieure à 200°C) est utilisée pour faciliter l'entrainement de l'eau.

Selon un mode particulier de l'invention, l'étape d'élimination de l'eau se fait après l'étape ee).

Quel que soit leur procédé de préparation, les enveloppes comprenant le (co)polymère hydrosoluble peuvent se présenter sous forme liquide ou solide. Lorsque les enveloppes comprenant le (co)polymère hydrosoluble sont sous forme liquide, elles sont préférentiellement sous une forme de dispersion eau dans huile ou sous une forme de dispersion liquide de polymère. Lorsque les enveloppes comprenant le (co)polymère hydrosoluble sont sous forme solide, elles sont préférentiellement sous la forme d'une poudre.

Selon un mode particulier de l'invention, la forme poudre peut être obtenue en séchant la dispersion obtenue en étape d) ou ff). Comme technique de séchage on peut citer le « spray drying » (séchage par pulvérisation), le séchage sur tambour, le séchage micro-ondes ou encore le séchage en lit fluidisé.

Selon un autre mode particulier de l'invention, la polymérisation du polymère interfacial s'effectue à la fois pendant et après la polymérisation du (co)polymère hydrosoluble.

Comme exposé précédemment, la dispersion peut comprendre un agent inverseur comme un tensioactif huile dans eau. Il permet de faciliter l'inversion de phase lorsque la dispersion est mélangée avec de l'eau ou une saumure. Généralement, ils ont une valeur de HLB supérieure à 9, préférentiellement supérieure à 10, et plus précisément comprise entre 10 et 18. L'homme de métier sait comment sélectionner ces agents inverseurs et ajuster leur quantité comme cela est décrit dans le document WO 2014/128400.

L'agent inverseur peut être ajouté dans la dispersion obtenue selon l'invention lors de sa préparation ou après sa préparation, ou dans la dispersion concentrée ou dans la forme solide obtenue après séchage de la dispersion.

*Procédé de récupération assistée du pétrole et/ou du gaz*

Un autre aspect de l'invention concerne un procédé de récupération assistée du pétrole et/ou du gaz utilisant la dispersion ci-dessus mentionnée tel que défini par la revendication 11.

La composition (dispersion) obtenue selon l'invention a pour fonctionnalité de viscosifier les eaux injectées dans les réservoirs contenant du pétrole ou du gaz pour assurer un contrôle de mobilité sans qu'un recours à la réticulation, c'est à dire un pontage chimique inter chaines, ne soit nécessaire.

Plus précisément, la présente invention concerne également un procédé de récupération assistée du pétrole ou du gaz, par balayage d'une formation souterraine, comprenant l'injection, dans la formation souterraine, d'un fluide d'injection aqueux obtenu en ajoutant dans une eau ou une saumure la dispersion d'une phase hydrophile dans une phase lipophile obtenue selon l'invention, ou sa forme concentrée après élimination d'une partie de l'eau, ou sa forme solide obtenue après séchage de ladite dispersion. Dans ce procédé, le polymère interfacial se dégrade avec le temps dans les conditions de température et/ou de pH de la formation souterraine, libérant ainsi le (co)polymère hydrosoluble une fois dans le réservoir.

Quelle que soit la forme utilisée (dispersion, dispersion concentrée ou forme solide obtenue à partir de la dispersion) l'effet protecteur de l'enveloppe se produit et ainsi les polymères sont protégés des dégradations chimiques et mécaniques, notamment pendant l'injection.

Autrement dit, et plus précisément, le procédé de récupération assistée du pétrole et/ou du gaz selon l'invention comprend les étapes suivantes :

- Préparation, selon l'invention, d'un fluide d'injection aqueux par addition dans une eau ou dans une saumure de la dispersion d'une phase hydrophile dans une phase lipophile, ou sa forme concentrée après élimination d'une partie de l'eau, ou sa forme solide obtenue après séchage de ladite dispersion,
- Injection du fluide d'injection dans une formation souterraine,
- Balayage de la formation souterraine à l'aide du fluide injecté,
- Récupération d'un mélange aqueux et hydrocarboné (pétrole et/ou gaz).

Selon l'invention, le fluide d'injection comprend avantageusement entre 30 ppm et 50 000 ppm de la dispersion ou de la dispersion concentrée ou de la forme solide obtenue à partir de la dispersion, plus avantageusement entre 100 et 30 000 ppm, et encore plus avantageusement entre 300 et 15 000 ppm.

Selon l'invention, le fluide d'injection comprend avantageusement entre 10 ppm et 15 000 ppm de (co)polymère hydrosoluble, plus avantageusement entre 50 et 10 000 ppm, et encore plus avantageusement entre 100 et 5 000 ppm.

Par « (co)polymère hydrosoluble », on entend un (co)polymère soluble dans l'eau dans les conditions normales d'utilisation, c'est-à-dire au moins aux concentrations indiquées ci-dessus.

Ainsi, le (co)polymère hydrosoluble compris dans la phase hydrophile est protégé par l'enveloppe formée d'au moins un polymère interfacial obtenu par polymérisation d'au moins un monomère de formule (I), l'enveloppe étant apte à être dégradée dans les conditions de température et/ou de pH de la formation souterraine.

Le procédé selon l'invention permet de préserver le polymère des dégradations mécaniques et chimiques liées à la préparation de la composition injectée avec le polymère, et à son injection, tout en conservant une bonne injectivité et un excellent balayage de la formation souterraine.

En effet, le polymère interfacial permet de protéger le (co)polymère hydrosoluble compris dans la phase hydrophile du cisaillement généré par la préparation et l'injection du fluide d'injection et de la dégradation chimique liée à l'oxygène, les métaux, l'$H_2S$.

Une fois le fluide d'injection injecté, le (co)polymère hydrosoluble est libéré, et ce de manière subséquente à la dégradation de l'enveloppe formée par le polymère interfacial dans les conditions de température et/ou de pH de la formation souterraine.

Ainsi, le balayage est effectué par une composition aqueuse comprenant au moins un (co)polymère hydrosoluble n'ayant pas subi de dégradations mécanique ou chimique.

Sans vouloir être lié à une quelconque théorie, la formation du fluide d'injection par introduction de la dispersion obtenue selon l'invention ne permet pas de libérer le (co)polymère hydrosoluble de son enveloppe, et ce même en présence d'un inverseur (tensioactif huile dans eau). Le pH et/ou la température de la formation souterraine permettent l'hydrolyse du polymère interfacial et donc la libération retardée du (co)polymère totalement hydrosoluble. Contrairement aux procédés conventionnels de type EOR, la présente invention ne permet pas la libération du (co)polymère hydrosoluble lors de la formation du fluide d'injection.

L'invention et les avantages qui en découlent ressortiront mieux des figures et exemples suivants donnés afin

d'illustrer l'invention et non de manière limitative.

## DESCRIPTION DES FIGURES

La Figure 1 est une illustration schématique de polymères hydrosolubles dans une enveloppe, préparés selon l'invention.

La figure 2 illustre la libération des polymères hydrosolubles à partir de la dispersion de l'exemple 1, mesurée par l'augmentation de la viscosité.

La figure 3 illustre la libération des polymères hydrosolubles à partir de la dispersion de l'exemple 2, mesurée par l'augmentation de la viscosité.

La figure 4 illustre la viscosité, en fonction du cisaillement, de la dispersion de l'exemple 2 avec l'enveloppe formée par le polymère interfacial, sans enveloppe et après libération du (co)polymère hydrosoluble.

## EXEMPLES DE REALISATION DE L'INVENTION

### Exemple 1

Partie A : Préparation du monomère X1 correspondant à la formule (I)

0,16 g de méthacrylate de glycidyle (97%) est ajouté à 20,0g d'oleyl diéthanolamide (Witcamide 511 - Akzo nobel) sous agitation magnétique. Le milieu est laissé sous agitation pendant 12 heures à température ambiante.

Partie B : Préparation d'une dispersion selon l'invention

On prépare une phase hydrophile contenant 365,8g d'acrylamide (50%), 24,6g d'acide acrylique (100%), 234,6g de sel sodique d'acide acrylamido tertio butyl sulfonique (50%), 29,0g d'eau déionisée, 25,9g de soude (50%), 1,6g d'une solution aqueuse d'hypophosphite de sodium (5g/L), 0,94g d'hydroperoxide de tert-butyle (0,7%), 0,40g de sel pentasodique de l'acide diéthylène triamine penta acétique (Versenex 80) dispersée dans un mélange de 280g d'hydrocarbure aliphatique D100s (Exxsol D100) et de 20g du monomère X1. Le pH est ajusté à 6,50.

Après homogénéisation et désoxygénation par azote pendant 30 minutes, la polymérisation est amorcée par ajout d'une solution de bisulfite de sodium.

### Exemple 2

Partie A : Préparation du monomère X2 correspondant à la formule (I)

15,7 g de méthacrylate de glycidyle (97%) sont ajoutés au goutte à goutte à 20,0g d'oleyl diéthanolamide (Witcamide 511 - Akzo nobel) sous agitation magnétique. Le milieu est laissé sous agitation pendant 12 heures à température ambiante.

Partie B : Préparation d'une dispersion sans polymère interfacial (contre-exemple)

On prépare une phase hydrophile contenant 363,8g d'acrylamide (50%), 24,6g d'acide acrylique (100%), 234,6g de sel sodique d'acide acrylamido tertio butyl sulfonique (50%), 29,0g d'eau déionisée, 25,9g de soude (50%), 1,6g d'une solution aqueuse d'hypophosphite de sodium (5g/L), 0,94g d'hydroperoxide de tert-butyle (0,7%), 0,40g de sel pentasodique de l'acide diéthylène triamine penta acétique (Versenex 80) dispersée dans un mélange de 280g d'hydrocarbure aliphatique D100s (Exxsol D100) et 20g d'oleyl diéthanolamide (Witcamide 511 - Akzo nobel). Le pH est ajusté à 6,50.

Après homogénéisation et désoxygénation par azote pendant 30 minutes, la polymérisation est amorcée par ajout d'une solution de bisulfite de sodium.

Partie C : Préparation d'une dispersion selon l'invention

36g d'acrylamide (50%), 1,6g d'hydroperoxyde de ter-butyle (0,7%) et 0,6g de monomère X2 sont ajoutés à la dispersion obtenue en partie B. La formation du polymère interfacial, par polymérisation de X2, est amorcée par ajout d'une solution de bisulfite de sodium (amorceur radicalaire).

**Exemple 3 - Libération des chaînes mesurée par rhéologie**

Des solutions aqueuses à 1% (10 000 ppm) en masse de polymère sont réalisées par ajout d'une dispersion préparée selon l'invention, décrite dans les exemples 1 et 2, sous agitation vigoureuse dans une eau de mer synthétique.
Les solutions sont placées dans une étuve à 58°C et leurs viscosités sont mesurées régulièrement à l'aide d'un Kinexus Pro+ de Malvern Instruments. L'augmentation de la viscosité visible en Figures 2 (pH = 8,0) et 3 (pH = 6,2) provient de la libération du polymère hydrosoluble.

**Exemple 4 - Protection contre la dégradation mécanique**

Pour démontrer la protection mécanique du polymère apportée par l'enveloppe, des solutions aqueuses à 1000 ppm de polymère de l'exemple 2, avec et sans enveloppe (préparée selon l'invention et contre-exemple), ont été préparées dans de l'eau de mer synthétique. Les solutions ont été cisaillées en les faisant passer dans un tuyau de faible section à différentes pressions. Les échantillons sont ensuite collectés en sortie de tuyau et la viscosité à $7,3 s^{-1}$ est mesurée à 25°C sur un Kinexus Pro+ de Malvern Instruments. Le gradient de cisaillement est déterminé en mesurant le flux en sortie du tuyau.
Les données sont présentées en Figure 4. Le polymère sans enveloppe est rapidement dégradé. Les solutions de polymère ayant une enveloppe gardent des viscosités constantes très proches de 1,0 cp. Chacune des solutions préparées selon l'invention ayant été collectées après cisaillement, c'est-à-dire à chaque point de relevé, sont, après mesure de leur viscosité, ensuite activées en étant placées pendant 4 jours dans une étuve à 58°C. Leurs viscosités après libération du polymère hydrosoluble sont alors mesurées. Celles-ci demeurent très proches des viscosités des solutions non-cisaillées et sans enveloppe initiale.

Tableau 1 : Viscosité de la solution de polymère à 7,3 $s^{-1}$, T = 25°C (cp) en fonction du cisaillement (Figure 4).

| Gradient de cisaillement ($s^{-1}$) | 0 | 119000 | 163000 | 195000 | 223000 | 253000 |
|---|---|---|---|---|---|---|
| P1 : Viscosité du polymère sans enveloppe | 7,6 | 5,9 | 4,2 | 3,5 | 3,2 | 2,8 |
| P2 : Viscosité du polymère avec enveloppe | 1,1 | 1,1 | 1,1 | 1,1 | 1,1 | 1,1 |
| P3 : Viscosité du polymère après dégradation de l'enveloppe | 7,4 | 7,4 | 7,2 | 7,2 | 7,2 | 7,6 |

**Revendications**

1. Procédé de préparation d'une dispersion d'une phase hydrophile, comprenant au moins un (co)polymère hydrosoluble, dans une phase lipophile, comprenant les étapes suivantes :

   a) Préparation d'une phase lipophile comprenant un solvant lipophile et au moins un monomère de formule (I) :

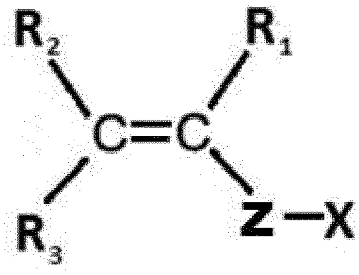

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; OC(=O) ; NH-C(=O)-NH ; NH-C(=O)-O ; et une chaine carbonée comportant de 1 à 20 atomes de carbone insaturée ou non, substituée ou non pouvant comporter un ou plusieurs hétéroatomes choisis parmi l'azote et l'oxygène,
- X est un groupe choisi parmi les alcanolamide, les esters de sorbitane, les esters de sorbitane éthoxylés, les esters de glyceryle, et les polyglycosides ; et comprenant une chaîne hydrocarbonée, saturée ou insaturée, linéaire, ramifiée ou cyclique, éventuellement aromatique,

b) Préparation d'une phase hydrophile comprenant au moins un monomère distinct du monomère de formule (1),
c) introduction de la phase hydrophile dans la phase lipophile sous agitation afin de former une dispersion phase hydrophile dans phase lipophile,
d) une fois la dispersion formée, polymérisation des monomères de la phase hydrophile pour obtenir le (co)polymère hydrosoluble et polymérisation d'au moins un monomère de formule (I) pour obtenir un polymère interfacial formant une enveloppe à l'interface de la phase hydrophile et de la phase lipophile. ou

aa) Préparation d'une phase lipophile comprenant un solvant lipophile et au moins un tensioactif eau dans huile ne portant pas de fonction polymérisable,
bb) Préparation d'une phase hydrophile comprenant au moins un monomère distinct du monomère de formule (I),
cc) Introduction de la phase hydrophile dans la phase lipophile sous agitation afin de former une dispersion phase hydrophile dans phase lipophile,
dd) Une fois la dispersion formée, polymérisation des monomères de la phase hydrophile pour obtenir le (co)polymère hydrosoluble,
ee) Une fois la polymérisation achevée, introduction d'au moins un monomère de formule (I),

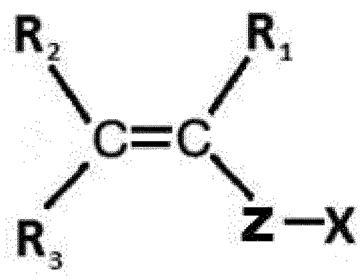

Formule (I)

dans laquelle,

- R1, R2, R3 sont indépendamment choisis dans le groupe comprenant un atome d'hydrogène, un groupe méthyle, un groupement carboxylate et Z-X,
- Z est choisi dans le groupe comprenant C(=O)-O ; C(=O)-NH ; OC(=O) ; NH-C(=O)-NH ; NH-C(=O)-O ; et une chaine carbonée comportant de 1 à 20 atomes de carbone insaturée ou non, substituée

ou non pouvant comporter un ou plusieurs hétéroatomes choisis parmi l'azote et l'oxygène,
- X est un groupe choisi parmi les alcanolamide, les esters de sorbitane, les esters de sorbitane éthoxylés, les esters de glyceryle, et les polyglycosides ; et comprenant une chaîne hydrocarbonée, saturée ou insaturée, linéaire, ramifiée ou cyclique, éventuellement aromatique,

ff) Polymérisation d'au moins un monomère de formule (I) pour obtenir un polymère interfacial formant une enveloppe à l'interface de la phase hydrophile et de la phase lipophile.

**2.** Procédé selon la revendication 1, **caractérisé en ce que** l'étape ee) comprend l'introduction dans la dispersion, avec le monomère de formule (I), d'au moins un monomère distinct du monomère de formule (I), et/ou au moins un agent de structure.

**3.** Procédé selon la revendication 1 ou 2, **caractérisé en ce que** le (co)polymère hydrosoluble est obtenu à partir d'au moins un monomère non ionique et/ou au moins un monomère anionique et/ou au moins un monomère cationique et/ou au moins un monomère zwittérionique.

**4.** Procédé selon la revendication 3, **caractérisé en ce que** le monomère non ionique est choisi dans le groupe comprenant l'acrylamide, le méthacrylamide, le N-isopropylacrylamide, le N,N-diméthylacrylamide, le N-méthylolacrylamide, la N-vinylformamide, le N-vinyl acetamide, la N-vinylpyridine la N-vinylpyrrolidone, l'acryloyl morpholine, le méthacrylate de glycidyle, le méthacrylate de glyceryle et la diacétone acrylamide.

**5.** Procédé selon l'une des revendications 3 à 4, **caractérisé en ce que** le monomère anionique est choisi dans le groupe comprenant les sels du méthacrylate de 3-sulfopropyle, et les monomères non salifiés, partiellement ou totalement salifiés choisis parmi l'acide acrylique, l'acide méthacrylique, l'acide itaconique, l'acide maléique, l'acide acrylamido tertio butyl sulfonique, l'acide vinylsulphonique, et l'acide vinylphosphonique.

**6.** Procédé selon l'une des revendications 1 à 5, **caractérisé en ce que** le (co)polymère hydrosoluble est linéaire ou structuré.

**7.** Procédé selon l'une des revendications 1 à 6, **caractérisé en ce que** le polymère interfacial comprend, en plus du monomère de formule (I), au moins un monomère non ionique et/ou au moins un monomère anionique et/ou au moins un monomère cationique.

**8.** Procédé selon l'une des revendications 1 à 7, **caractérisé en ce que** le monomère de formule (I) a la formule suivante :

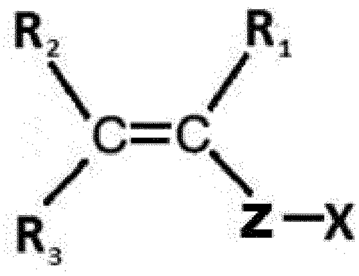

Formule (I)

dans laquelle,

- R1, R2, R3 indépendamment sont un atome d'hydrogène ou un groupe méthyle,
- Z est choisi dans le groupe comprenant $CH_2$, C(=O)-O, C(=O)-NH, et - (C=O)-O-$CH_2$-CH(OH)-$CH_2$,
- X est un groupe choisi parmi les alcanolamide et les esters de sorbitane ; et comprenant une chaine hydrocarbonée, saturée ou insaturée, linéaire, ramifiée ou cyclique, éventuellement aromatique.

**9.** Procédé selon l'une des revendications 1 à 8, **caractérisé en ce que** le monomère de formule (I) est choisi parmi le (méth)acrylate du monooléate de sorbitane, le (méth)acrylate de 2-hydroxypropyl du monooléate de diéthanolamide ou le (méth)acrylate glycéryl du monooléate de sorbitane.

**10.** Procédé selon l'une des revendications 1 à 9, **caractérisé en ce que** le monomère de formule (I) a la formule suivante :

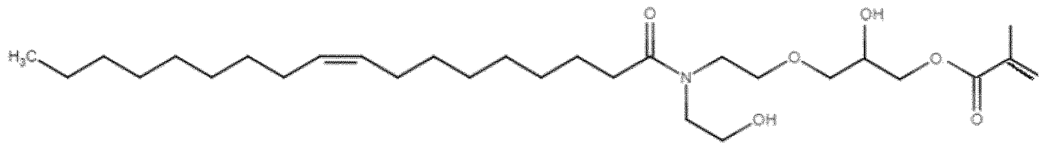

**11.** Procédé de récupération assistée du pétrole ou du gaz, par balayage d'une formation souterraine, comprenant l'injection dans la formation souterraine d'un fluide d'injection comprenant la dispersion d'une phase hydrophile dans une phase lipophile obtenue par un procédé de préparation selon l'une des revendications 1 à 10.

**12.** Procédé selon la revendication 11, **caractérisé en ce qu'**il comprend les étapes suivantes :

- Préparation du fluide d'injection à partir de la dispersion d'une phase hydrophile dans phase une lipophile, avec de l'eau ou de la saumure,
- Injection du fluide d'injection dans une formation souterraine,
- Balayage de la formation souterraine à l'aide du fluide injecté,
- Récupération d'un mélange aqueux et hydrocarboné.

**Patentansprüche**

**1.** Verfahren zur Herstellung einer Dispersion einer hydrophilen Phase, die mindestens ein wasserlösliches (Co)polymer umfasst, in einer lipophilen Phase, das folgende Schritte umfasst:

a) Herstellung einer lipophilen Phase, die ein lipophiles Lösungsmittel und mindestens ein Monomer der Formel (I) umfasst:

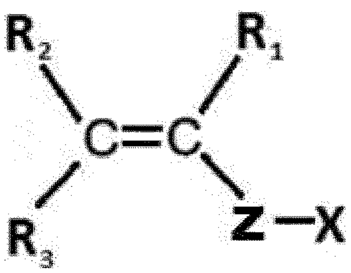

Formel (I)

wobei in dieser Formel,

- RI, R2, R3 unabhängig voneinander aus der Gruppe ausgewählt sind, die ein Wasserstoffatom, eine Methylgruppe, eine Carboxylatgruppe und Z-X umfasst,
- Z ausgewählt ist aus der Gruppe umfassend C(=O)-O; C(=O)-NH; O-C(=O); NH-C(=O)-NH; NH-C(=O)-O; und einer ungesättigten oder gesättigten, substituierten oder unsubstituierten Kohlenstoffkette mit 1 bis 20 Kohlenstoffatomen, die ein oder mehrere Heteroatome, ausgewählt aus Stickstoff und Sauerstoff, enthalten kann,
- X eine Gruppe ist, die aus Alkanolamid, Sorbitanestern, ethoxylierten Sorbitanestern, Glycerylestern und Polyglycosiden ausgewählt ist; und eine gesättigte oder ungesättigte, geradkettige, verzweigte oder cyclische, gegebenenfalls aromatische Kohlenwasserstoffkette umfasst,

b) Herstellung einer hydrophilen Phase, die mindestens ein Monomer umfasst, das sich von dem Monomer der Formel (I) unterscheidet,
c) Einführung der hydrophilen Phase in die lipophile Phase unter Rühreinwirkung, um eine Dispersion der

hydrophilen Phase in der lipophilen Phase zu bilden,
d) sobald die Dispersion gebildet ist, Polymerisation der Monomere der hydrophilen Phase, um das wasserlösliche (Co)polymer zu erhalten, und Polymerisation von mindestens einem Monomer der Formel (I), um ein Grenzflächenpolymer zu erhalten, das eine Hülle an der Grenzfläche der hydrophilen Phase und der lipophilen Phase bildet.
Oder

aa) Herstellung einer lipophilen Phase, die ein lipophiles Lösungsmittel und mindestens ein Wasser-in-Öl-Tensid umfasst, das keine polymerisierbare Funktion trägt,
bb) Herstellung einer hydrophilen Phase, die mindestens ein Monomer umfasst, das sich von dem Monomer der Formel (I) unterscheidet,
cc) Einführung der hydrophilen Phase in die lipophile Phase unter Rühreinwirkung, um eine Dispersion der hydrophilen Phase in der lipophilen Phase zu bilden,
dd) sobald sich eine Dispersion gebildet hat, Polymerisation der Monomere der hydrophilen Phase, um das wasserlösliche (Co)polymer zu erhalten,
ee) nach Abschluss der Polymerisation Einführung von mindestens einem Monomer der Formel (I),

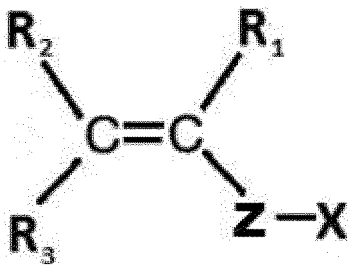

Formel (I)

wobei in dieser Formel,

- RI, R2, R3 unabhängig voneinander aus der Gruppe ausgewählt sind, die aus ein Wasserstoffatom, eine Methylgruppe, eine Carboxylatgruppe und Z-X umfasst,
- Z ausgewählt ist aus der Gruppe umfassend C(=O)-O; C(=O)-NH; O-C(=O); NH-C(=O)-NH; NH-C(=O)-O; und einer ungesättigten oder gesättigten, substituierten oder unsubstituierten Kohlenstoffkette mit 1 bis 20 Kohlenstoffatomen, die ein oder mehrere Heteroatome, ausgewählt aus Stickstoff und Sauerstoff, enthalten kann,
- X eine Gruppe ist, die aus Alkanolamid, Sorbitanestern, ethoxylierten Sorbitanestern, Glycerylestern und Polyglycosiden ausgewählt ist; und eine gesättigte oder ungesättigte, geradkettige, verzweigte oder cyclische, gegebenenfalls aromatische Kohlenwasserstoffkette umfasst,

ff) Polymerisation von mindestens einem Monomer der Formel (I), um ein Grenzflächenpolymer zu erhalten, das eine Hülle an der Grenzfläche der hydrophilen Phase und der lipophilen Phase bildet.

2. Verfahren nach Anspruch 1, **dadurch gekennzeichnet, dass** Schritt ee) die Einführung mindestens eines Monomers, das sich von dem Monomer der Formel (I) unterscheidet, und/oder mindestens eines Strukturierungsmittels in die Dispersion zusammen mit dem Monomer der Formel (I) umfasst.

3. Verfahren nach Anspruch 1 oder 2, **dadurch gekennzeichnet, dass** das wasserlösliche (Co)polymer aus mindestens einem nichtionischen Monomer und/oder mindestens einem anionischen Monomer und/oder mindestens einem kationischen Monomer und/oder mindestens einem zwitterionischen Monomer erhalten wird.

4. Verfahren nach Anspruch 3, **dadurch gekennzeichnet, dass** das nichtionische Monomer ausgewählt ist aus der Gruppe umfassend Acrylamid, Methacrylamid, N-Isopropylacrylamid, N,N-Dimethylacrylamid besteht, N-Methylolacrylamid, N-Vinylformamid, N-Vinylacetamid, N-Vinylpyridin, N-Vinylpyrrolidon, Acryloylmorpholin, Glycidylmethacrylat, Glycerylmethacrylat und Diacetonacrylamid.

5. Verfahren nach einem der Ansprüche 3 bis 4, **dadurch gekennzeichnet, dass** das anionische Monomer aus der Gruppe ausgewählt ist, die aus den Salzen von 3-Sulfopropylmethacrylat und nicht in Salzform vorliegenden, teilweise oder vollständig in Salzform vorliegenden Monomeren besteht, die aus Acrylsäure, Methacrylsäure, Itaconsäure, Maleinsäure, Acrylamido-tert-Butyl-Sulfonsäure, Vinylsulfonsäure und Vinylphosphonsäure ausgewählt sind.

6. Verfahren nach einem der Ansprüche 1 bis 5, **dadurch gekennzeichnet, dass** das wasserlösliche (Co)polymer linear oder strukturiert ist.

7. Verfahren nach einem der Ansprüche 1 bis 6, **dadurch gekennzeichnet, dass** das Grenzflächenpolymer zusätzlich zu dem Monomer der Formel (I) mindestens ein nichtionisches Monomer und/oder mindestens ein anionisches Monomer und/oder mindestens ein kationisches Monomer umfasst.

8. Verfahren nach einem der Ansprüche 1 bis 7, **dadurch gekennzeichnet, dass** das Monomer der Formel (I) folgende Formel hat:

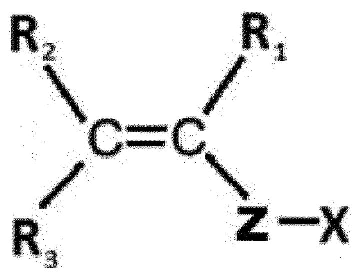

Formel (I)

wobei in diesem Fall,

- RI, R2, R3 unabhängig voneinander ein Wasserstoffatom oder eine Methylgruppe sind,
- Z ausgewählt ist aus der Gruppe umfassend CH2, C(=O)-O, C(=O)-NH und - (C=O)-O-CH2-CH(OH)-CH2,
- X eine Gruppe ist, die aus Alkanolamid und Sorbitanestern ausgewählt ist; und eine gesättigte oder ungesättigte, geradkettige, verzweigte oder cyclische, gegebenenfalls aromatische Kohlenwasserstoffkette umfasst.

9. Verfahren nach einem der Ansprüche 1 bis 8, **dadurch gekennzeichnet, dass** das Monomer der Formel (I) ausgewählt ist aus Sorbitanmonooleat(meth)acrylat, Diethanolamidmonooleat-2-Hydroxypropyl(meth)acrylat oder Sorbitan-monooleat-Glyceryl(meth)acrylat.

10. Verfahren nach einem der Ansprüche 1 bis 9, **dadurch gekennzeichnet, dass** das Monomer der Formel (I) folgende Formel hat:

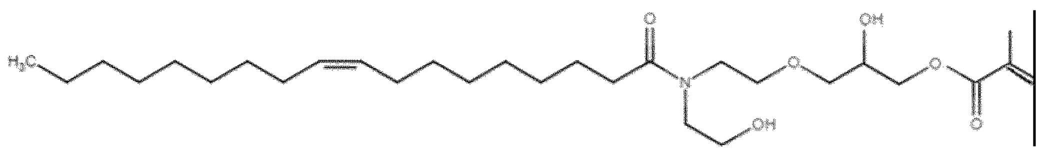

11. Verfahren zur assistierten Öl- oder Gasgewinnung durch Spülung einer unterirdischen Formation, bei dem man in die unterirdische Formation ein Injektionsfluid einspritzt, das die Dispersion einer hydrophilen Phase in einer lipophilen Phase umfasst, die durch ein Herstellungsverfahren nach einem der Ansprüche 1 bis 10 erhalten wurde.

12. Verfahren nach Anspruch 11, **dadurch gekennzeichnet, dass** es folgende Schritte umfasst:

- Herstellung des Injektionsfluids aus der Dispersion einer hydrophilen Phase in einer lipophilen Phase mit Wasser oder Sole.
- Injektion des Injektionsfluids in eine unterirdische Formation,
- Spülung der unterirdischen Formation mithilfe des injizierten Fluids,
- Gewinnung eines wässrigen Kohlenwasserstoffgemisches.

## Claims

1. Method for preparing a dispersion of a hydrophilic phase, comprising at least one water-soluble (co)polymer, in a lipophilic phase, comprising the following steps:

a) Preparing a lipophilic phase comprising a lipophilic solvent and at least one monomer of formula (I):

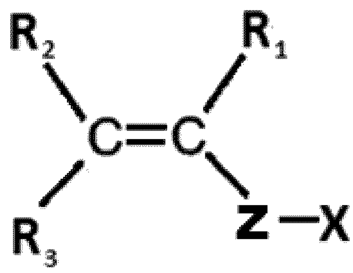

Formula (I)

wherein,

- R1, R2, R3 are separately chosen from the group comprising a hydrogen atom, a methyl group, a carboxylate group and Z-X,
- Z is chosen from the group comprising C(=O)-O; C(=O)-NH; O-C(=O); NH-C(=O)-NH; NH-C(=O)-O; and a saturated or unsaturated, substituted or unsubstituted carbon chain comprising 1 to 20 carbon atoms capable of comprising one or more heteroatoms chosen from nitrogen and oxygen,
- X is a group chosen from the alkanolamides, sorbitan esters, ethoxylated sorbitan esters, glyceryl esters, and polyglycosides; and comprising a saturated or unsaturated, linear, branched or cyclic, optionally aromatic, hydrocarbon chain,

b) preparing a hydrophilic phase comprising at least one monomer different from the monomer of formula (I),
c) introducing the hydrophilic phase into the lipophilic phase with stirring in order to form a dispersion of hydrophilic phase in lipophilic phase,
d) once the dispersion is formed, polymerization of the monomers of the hydrophilic phase to obtain the water-soluble (co)polymer and polymerization of at least one monomer of formula (I) to obtain an interface polymer forming a shell at the interface of the hydrophilic phase and the lipophilic phase.
or

aa) Preparing a lipophilic phase comprising a lipophilic solvent and at least one water-in-oil surfactant not bearing a polymerizable function,
bb) preparing a hydrophilic phase comprising at least one monomer different from the monomer of formula (I),
cc) introducing the hydrophilic phase into the lipophilic phase with stirring in order to form a dispersion of hydrophilic phase in lipophilic phase,
dd) once the dispersion is formed, polymerization of the monomers of the hydrophilic phase to obtain the water-soluble (co)polymer,
ee) once the polymerization is complete, introducing at least one monomer of formula (I),

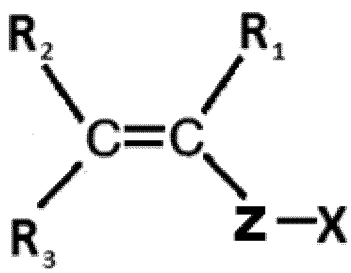

Formula (I)

wherein,

- R1, R2, R3 are separately chosen from the group comprising a hydrogen atom, a methyl group, a carboxylate group and Z-X,
- Z is chosen from the group comprising C(=O)-O; C(=O)-NH; O-C(=O); NH-C(=O)-NH; NH-C(=O)-O; and a saturated or unsaturated, substituted or unsubstituted carbon chain comprising 1 to 20 carbon atoms capable of comprising one or more heteroatoms chosen from nitrogen and oxygen,
- X is a group chosen from the alkanolamides, sorbitan esters, ethoxylated sorbitan esters, glyceryl esters, and polyglycosides; and comprising a saturated or unsaturated, linear, branched or cyclic, optionally aromatic, hydrocarbon chain,

ff) Polymerizing at least one monomer of formula (I) to obtain an interface polymer forming a shell at the interface of the hydrophilic phase and the lipophilic phase.

2. Method according to claim 1, **characterized in that** step ee) comprises the introduction into the dispersion, with the monomer of formula (I), of at least one monomer different from the monomer of formula (I), and/or at least one structure agent.

3. Method according to claim 1 or 2, **characterized in that** the water-soluble (co)polymer is obtained from at least one nonionic monomer and/or at least one anionic monomer and/or at least one cationic monomer and/or at least one zwitterionic monomer.

4. Method according to claim 3, **characterized in that** the nonionic monomer is chosen from the group comprising acrylamide, methacrylamide, N-isopropylacrylamide, N,N-dimethylacrylamide, N-methylolacrylamide, N-vinylformamide, N-vinyl acetamide, N-vinylpyridine, N-vinylpyrrolidone, acryloyl morpholine, glycidyl methacrylate, glyceryl methacrylate and diacetone acrylamide.

5. Method according to one of claims 3 to 4, **characterized in that** the anionic monomer is chosen from the group comprising 3-sulfopropyl methacrylate salts, and non-salified, partially or totally salified monomers chosen from acrylic acid, methacrylic acid, itaconic acid, maleic acid, acrylamido tertiary butyl sulfonic acid, vinylsulfonic acid, and vinylphosphonic acid.

6. Method according to one of claims 1 to 5, **characterized in that** the water-soluble (co)polymer is linear or structured.

7. Method according to one of claims 1 to 6, **characterized in that** the interface polymer comprises, in addition to the monomer of formula (I), at least one nonionic monomer and/or at least one anionic monomer and/or at least one cationic monomer.

8. Method according to one of claims 1 to 7, **characterized in that** the monomer of formula (I) has the following formula:

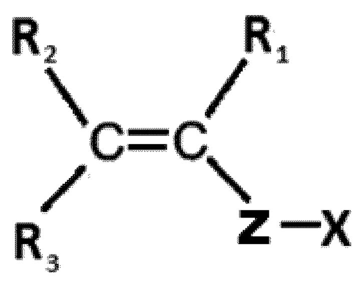

Formula (I)

wherein,

- R1, R2, R3 separately are a hydrogen atom or a methyl group,
- Z is chosen from the group comprising $CH_2$, C(=O)-O, C(=O)-NH, and - (C=O)-O-$CH_2$-CH(OH)-$CH_2$,
- X is a group chosen from the alkanolamides and sorbitan esters; and comprising a saturated or unsaturated, linear, branched or cyclic, optionally aromatic, hydrocarbon chain.

**9.** Method according to one of claims 1 to 8, **characterized in that** the monomer of formula (I) is chosen from sorbitan monooleate (meth)acrylate, diethanolamide monooleate 2-hydroxypropyl (meth)acrylate, or sorbitan monooleate glyceryl (meth)acrylate.

**10.** Method according to one of claims 1 to 9, **characterized in that** the monomer of formula (I) has the following formula:

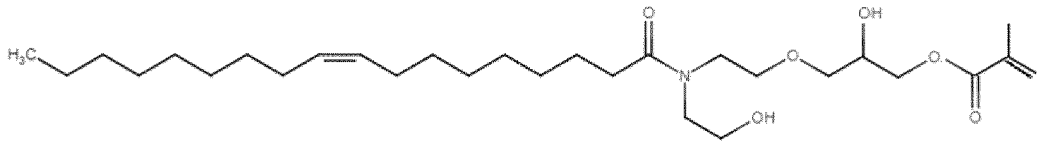

**11.** Method for enhanced oil or gas recovery, by flushing an underground formation, comprising the injection in the underground formation of an injection fluid comprising the dispersion of a hydrophilic phase in a lipophilic phase obtained by a method of preparation according to one of claims 1 to 10.

**12.** Method according to claim 11, **characterized in that** it comprises the following steps:

- Preparation of the injection fluid from the dispersion of a hydrophilic phase in a lipophilic phase, with water or brine,
- Injection of the injection fluid into an underground formation,
- Flushing of the underground formation using the fluid injected,
- Recovery of an aqueous and hydrocarbon mixture.

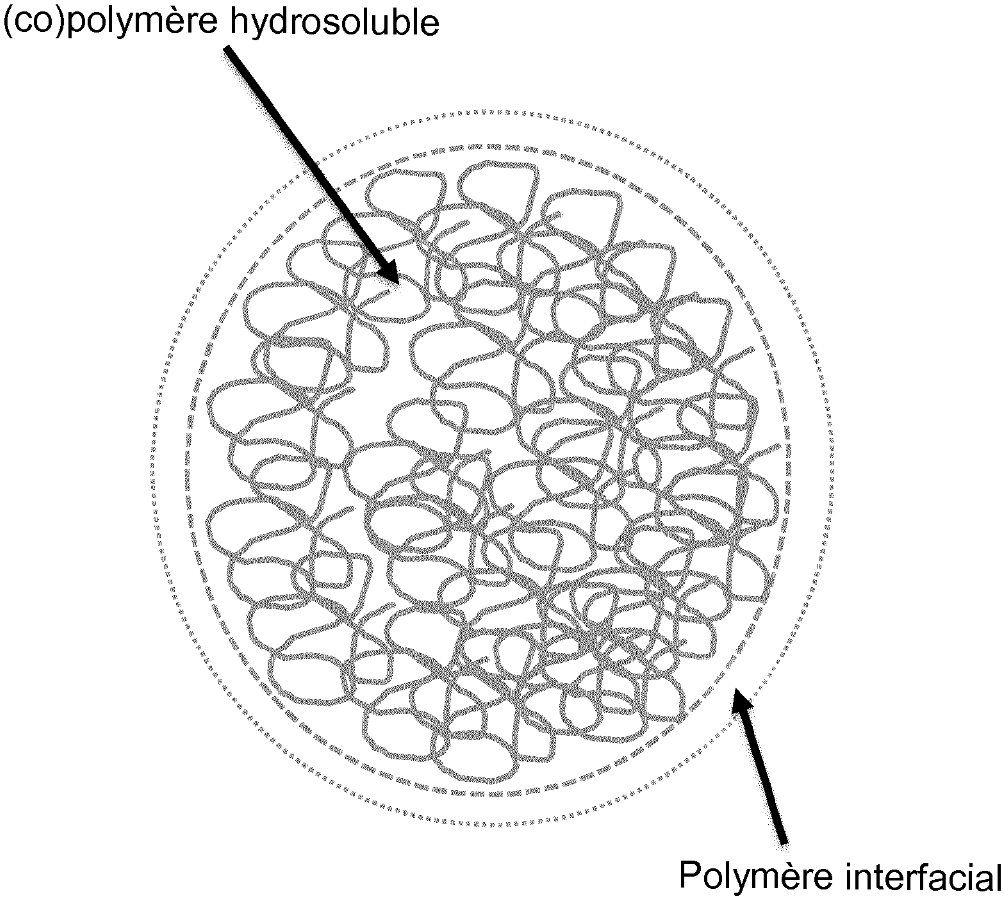


Fig. 1

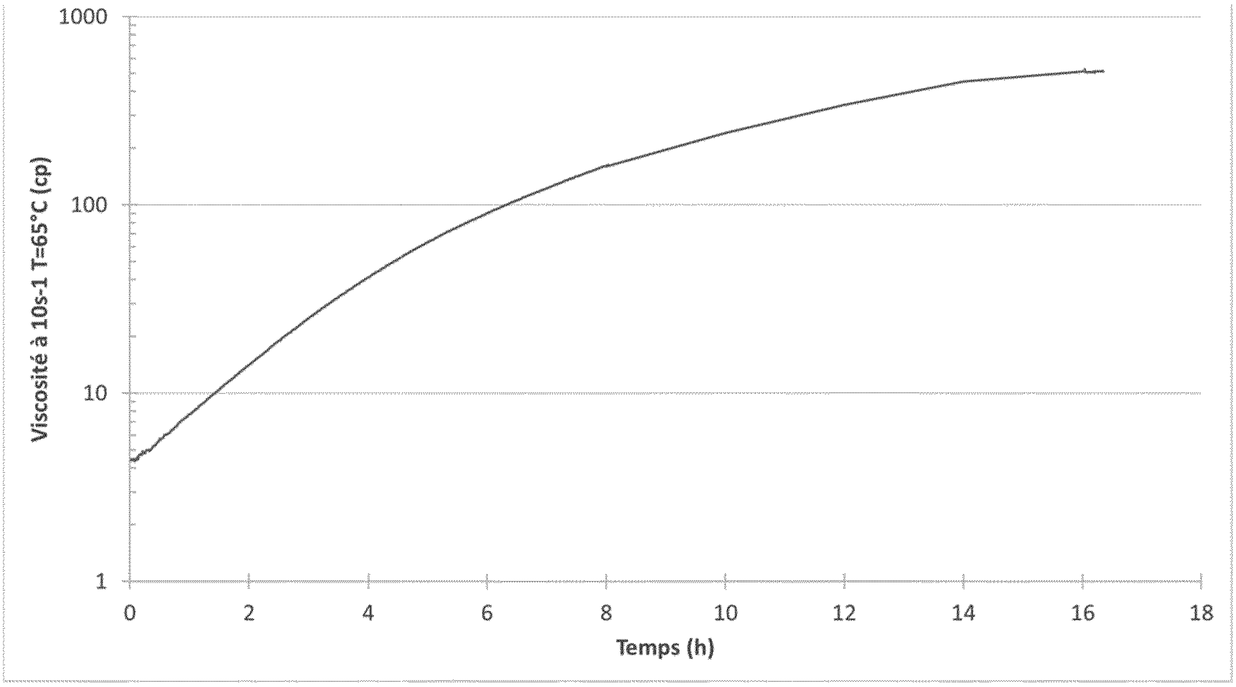
1000
100
10
1
0
2
4
6
8
10
12
14
16
18
Viscosité à 10s-1 T=65°C (cp)
Temps (h)

**Fig. 2**

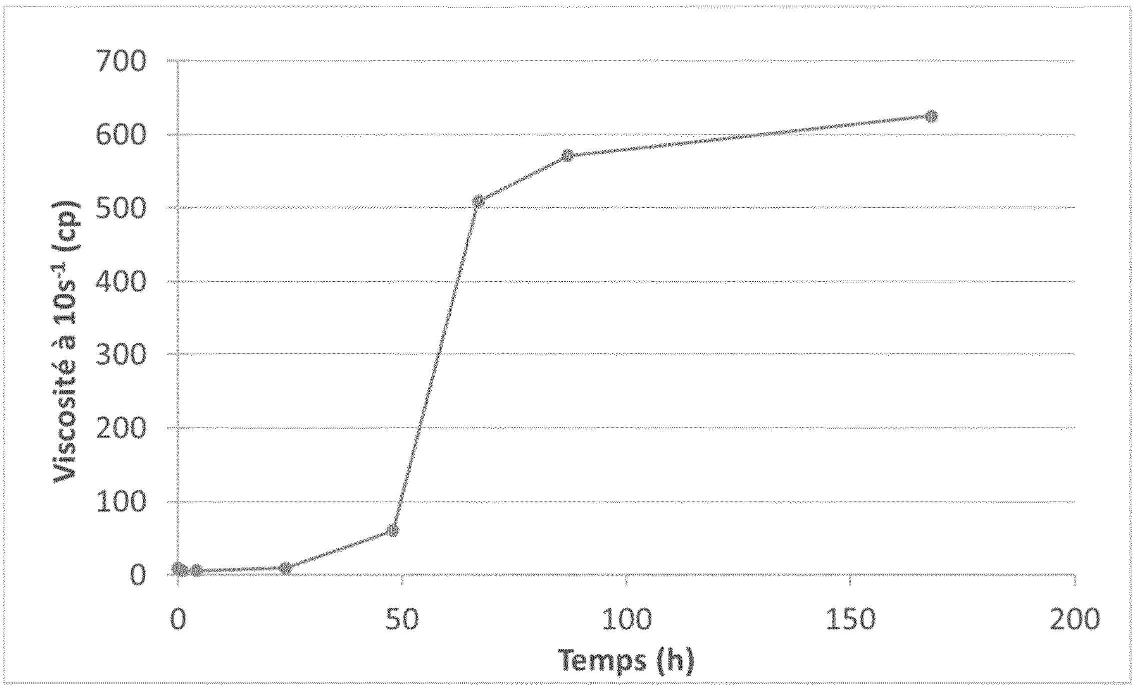
700
600
500
400
300
200
100
0
0
50
100
150
200
Viscosité à $10s^{-1}$ (cp)
Temps (h)

**Fig. 3**

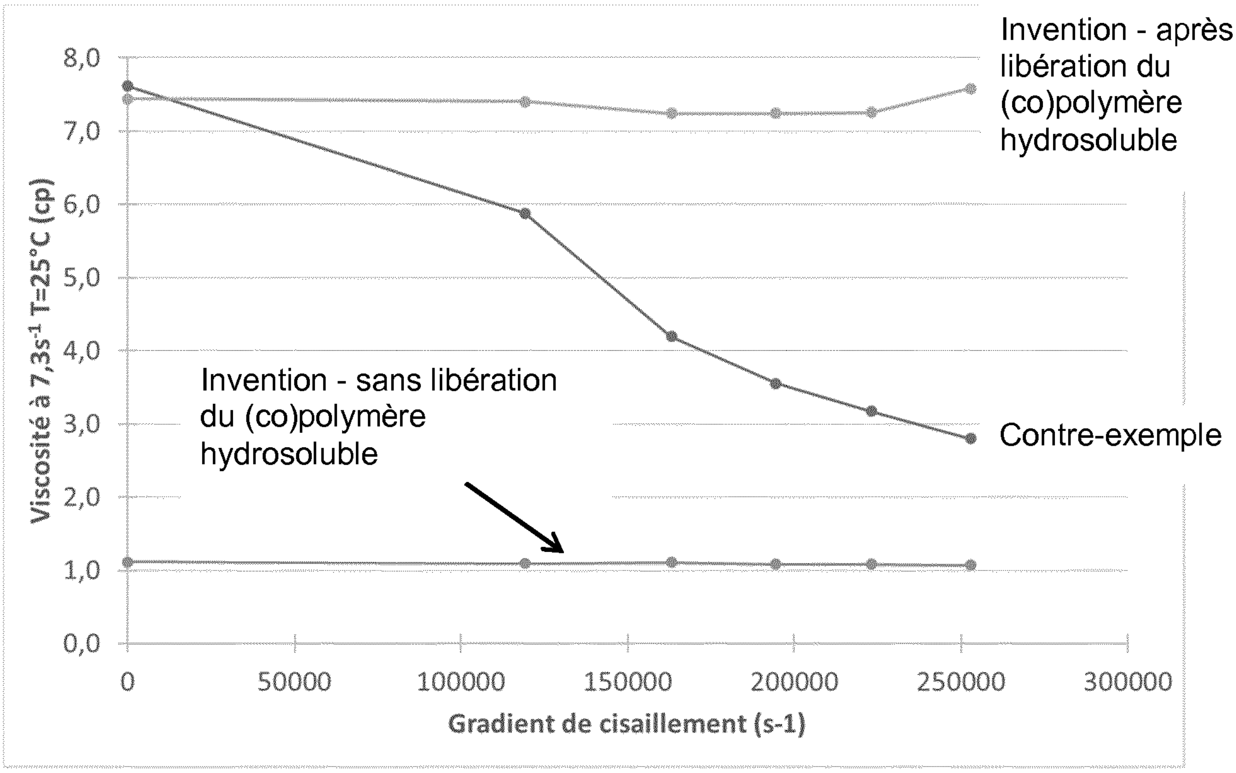
Invention - après libération du (co)polymère hydrosoluble
8,0
7,0
6,0
5,0
4,0
3,0
2,0
1,0
0,0
Viscosité à 7,3s-1 T=25°C (cp)
Invention - sans libération du (co)polymère hydrosoluble
Contre-exemple
0
50000
100000
150000
200000
250000
300000
Gradient de cisaillement (s-1)

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2010133258 A
- WO 2013108173 A
- US 20120292029 A
- US 2015041143 A
- US 7897546 B
- US 20110312858 A
- WO 8300337 A
- FR 2868783
- WO 2014128400 A


### Littérature non-brevet citée dans la description


- Oil & gas science and technology. *revue IFP,* 2008, vol. 63 (1), 9-19
- **GRIFFIN WC.** Classification of Surface-Active Agents by HLB. *Journal of the Society of Cosmetic Chemists,* 1949, vol. 1, 311